# EUROPEAN PATENT APPLICATION

(11) **EP 0 950 897 A1**
(43) Date of publication of application: **20.10.1999**
(21) Application number: 97949141.2
(22) Date of filing: 18.12.1997
(51) Int. Cl.: G01N 31/00, G01N 35/00

(54) **METHOD FOR STABILIZING LIQUID REAGENT AND REAGENT UNIT**

(30) Priority: 20.12.1996 JP 35462196
(71) Applicant: DAIICHI PURE CHEMICALS CO., LTD., Tokyo 103 (JP)
(72) Inventor: ABE, Toshikatsu Daiichi P.Chem. Co., Ltd, Ryugasaki-shi Ibaraki-ken 301 (JP); KOTANI, Kazuo Daiichi Pure Ch. Co., Ltd., Ibaraki-ken 301 (JP); SEKIGUCHI, M. Daiichi P. Chem. Co., Ltd, Ibaraki-ken 301 (JP)
(74) Representative: Lyons, Andrew John
(86) International application number: JP9704681
(87) International publication number: WO9828618

(57) **Abstract**

A method for stabilizing a liquid reagent which comprises, superposing, on the surface of the liquid reagent, a layer of an air-barrier substance incompatible with the reagent and having a lower specific gravity than the reagent, such as a chain hydrocarbon, cyclic hydrocarbon, or ether; and a reagent unit which comprises a container, a liquid reagent packed therein, and a layer of the air-barrier substance superposed on the surface of the reagent. Thus, the reagent can be effectively prevented from contacting with air without being affected, and the liquid reagent for use in examination can be stored stably for long after dissolution thereof or opening of the container.

## Description

### TECHNICAL FIELD

The present invention relates to a method for stabilizing a reagent. More particularly, the present invention relates to a method for stably storing a reagent such as a reagent for use in a clinical examination for measuring a biological component, and a reagent unit exhibiting superior storage stability prepared by using this method.

### BACKGROUND ART

At present, reagents used for clinical examinations are usually supplied as a liquid or in freeze-dried form. Liquid reagents are used as is and freeze dried reagents are dissolved when used for measurement. After measurement, the reagents remaining are generally stored unsealed in a cool place to be used for the next measurement.

Accordingly, the stability of the reagents during storage has to be sufficiently ensured. However, this is insufficient under the present conditions. Accuracy and precision that are the most important properties for diagnostic drugs may become insufficient over time because of the lowering of measurement values or sensitivity, coloration of the reagent, and an increase in blank values.

To overcome these problems, the period of time from the opening of the container or dissolving the reagents to the next measurement is shortened. However, the effect is unclear and insufficient. Because of the above situation, a method for effectively stabilizing the reagents after the opening or dissolving is now desired.

Accordingly, an object of the present invention is to provide a method for stably storing a reagent for use in an examination for a long period of time after dissolving or opening of the reagent.

### DISCLOSURE OF THE INVENTION

As a result of the studies of a mechanism of the deterioration of a liquid reagent, the present inventors have discovered that the contact of a reagent with air is the major cause. Specifically, the present inventors have discovered that, in addition to oxidation by oxygen contained in air, gases such as carbon dioxide and ammonia, which are often present in laboratories, are absorbed by the reagent to decrease the pH, deteriorate the components of the reagent, or increase the reagent blank values.

On the basis of the above knowledge, as a result of further extensive studies of a method for preventing the reagent from coming in contact with air without affecting the reagent, the present inventors have discovered that the reagent can be stably stored by superposing an air-barrier layer on the surface of the reagent. This finding has led to the completion of the present invention.

Specifically, the present invention provides a method for stabilizing a liquid reagent by superposing a layer of an air-barrier substance incompatible with the reagent and having a lower specific gravity than that of the reagent.

The present invention also provides a reagent unit comprising a container, a liquid reagent packed therein, and a layer of an air-barrier substance incompatible with the reagent and having a lower specific gravity than that of the reagent.

### BRIEF DESCRIPTION OF THE DRAWINGS

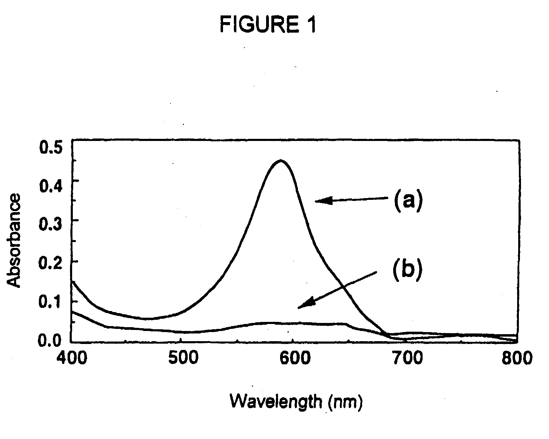

Figure 1 shows a comparison of absorption spectra of a reagent 1 for a triglyceride measuring reagent at a wavelength from 400 nm to 800 nm depending on the presence or absence of tetradecane. In Figure 1, (a) shows the case where tetradecane was not added and (b) shows the case where tetradecane was added.

### PREFERRED EMBODIMENT OF THE INVENTION

In the present invention, there are no specific limitations to the materials used as the air-barrier substance, insofar as the materials have a specific gravity (density) lower than that of the reagent, are incompatible with the reagent, and do not easily volatilize. Among such materials, materials that are liquid at room temperature and have a specific gravity lower than that of the reagent in the range from about 0.05 to 0.3 are preferable.

An aqueous reagent is generally used as a reagent for a clinical examination. In this case, oils which have a low specific gravity and are scarcely volatile are preferably used. As examples of such oils, compounds such as chain hydrocarbons, cyclic hydrocarbons, ethers, ketones, esters, alcohols, carboxylic acids, phenols, nitrogen-containing compounds, silicone oils, and derivatives of these compounds having a specific gravity from about 0.7 to 0.9, and particularly from about 0.7 to 0.86 can be given.

Specific examples of the above oils used as the air-barrier substance for an aqueous reagent are as follows. Examples of chain hydrocarbons include octane, nonane, decane, undecane, dodecane, tridecane, tetradecane, and the like. Examples of cyclic hydrocarbons include isopropylbenzene, xylene, diethylbenzene, cymene, dodecylbenzene, methylbenzene, benzene, mesitylene, cyclopentane, and the like.

Examples of ethers include ethyl isoamyl ether, ethyl t-butyl ether, diisoamyl ether, diisopropyl ether, diethylacetal, dibutyl ether, dipropyl ether, tetrahydropyran, methyl t-butyl ether, methylfuran, monochloro diethyl ether, and the like. Examples of ketones include isophorone, ethyl n-butyl ketone, diisobutyl ketone, diisopropyl ketone, diethyl ketone, di-n-propyl ketone, mesityl oxide, methyl-n-amylketone, methylisobutyl ketone, methylcyclohexanone, methyl n-butyl ketone, methyl-n-propyl ketone, methyl-n-hexyl ketone, methyl-n-heptyl ketone, and the like.

Examples of esters include dioctyl adipate, isoamyl formate, 2-ethylhexyl acetate, dibutyl sebacate, isoamyl propionate, and the like. Examples of alcohols include 2-ethylhexanol, 2-octanol, n-octanol, 3,5,5-trimethyl-1-hexanol, 2,6-dimethyl-4-heptanol, 2-heptanol, and the like.

Examples of carboxylic acids include oleic acid, caproic acid, and the like. Examples of phenols include dodecylphenol, nonylphenol, and the like. Examples of nitrogen-containing compounds include 2-ethylhexylamine, diisobutylamine, diethylbenzylamine, dioctylamine, N,N-dibutylaniline, N,N-dibutylethanolamine, N,N-dimethylaniline, triamylamine, trioctylamine, heptylamine, and the like. These air-barrier substances can be used individually or in combinations of two or more.

The method of the present invention is carried out by superposing the air-barrier substance on the liquid reagent or the reagent prepared by dissolving a freeze dried product. Although there are no specific limitations to the amount of the air-barrier substance, the air-barrier substance is preferably used in an amount from 0.03 ml to 1.0 ml per 1 cm² of the surface of the reagent (the surface in contact with air without the layer of the air-barrier substance).

The stable reagent unit of the present invention is prepared by packing the liquid reagent in the container according to a conventional method and superposing a layer of the air-barrier substance incompatible with the reagent and having a specific gravity lower than that of the reagent on the surface of the reagent.

As the container for the reagent, a container made of materials which do not pass air, such as glass, metal, and plastic, and having a narrow opening is preferably used.

When using the reagents for tests or examinations in the present invention, it is important that only the reagent is dispensed from the container or the reagent unit without being mixed with the air-barrier substance by using a pipette, needle, or the like.

If surfactants or other materials which emulsify the air-barrier substance are present in the reagent, the effect of the present invention may be insufficient. If any components of the reagent having some function in the measurement have high affinity with the air-barrier substance, the effects of the reagent may be impaired because such components move to the layer of the air-barrier substance.

Except for the above unusual cases, the present invention can provide the reagent with superior storage stability, exhibiting the initial performance for a long period of time. As specific examples of reagents to which the present invention can be advantageously applied, an alkaline phophatase measuring reagent, calcium measuring reagent, bile acid measuring reagent, creatinine measuring reagent, triglyceride measuring reagent, and the like can be given.

The present invention will be described with reference to Examples, which should not be construed as limiting the present invention.

### Example 1

### Application to alkaline phophatase measuring reagent:

Various air-barrier substances (hereinafter called "air-barrier agent") were added to a reagent 1 for the alkaline phophatase measuring reagent according to the formulation described below. The mixture was kept unsealed in a cool place (8°C). Using this alkaline phosphatase measuring reagent, alkaline phophatase activity in human blood serum was sequentially measured according to the following method to compare and examine the variation of the measurement values.

The results are shown in Table 1.

### (Reagent composition)

### Reagent 1

Ethylaminoethanol buffer solution: 1.0 M (pH 9.9)
Magnesium chloride: 0.5 mM
Air-barrier agent* (see Table 1): 0.2 ml/cm²

* The amount added per 1 cm² of an open area of the reagent container (the same applies to all Examples).

### Reagent 2

p-Nitrophenylphosphoric acid: 15 mM

### (Measuring method)

260 µl of the reagent 1 was added to 4 µl of a specimen. The mixture was stirred and then heated at 37°C for 5 minutes. 130 µl of the reagent 2 was added to this solution and the mixture was stirred. Using a reagent blank as a reference, the variation in absorbance of the reagent at a wavelength of 450 nm was measured from 2 to 5 minutes at 37°C using a Hitachi 7150 automated analyzer. In this measurement, a physiological saline solution was used for the measurement of the reagent blank. The alkaline phophatase (ALP) activity was calculated from a conversion factor derived from a molecular extinction coefficient of p-nitrophenylphosphate, which was the reaction product, and the variation in absorbance.

### (Results)

**TABLE 1**

| Air-barrier agent | ALP measurement value (U/l) | | | |
|---|---|---|---|---|
| | 0 day | 7 days | 14 days | 21 days |
| Octane | 443 | 443 | 442 | 444 |
| Nonane | 442 | 442 | 444 | 442 |
| Decane | 444 | 444 | 443 | 446 |
| Undecane | 443 | 441 | 440 | 442 |
| Dodecane | 445 | 440 | 443 | 445 |
| Tridecane | 443 | 445 | 443 | 443 |
| Tetradecane | 443 | 448 | 442 | 445 |
| Not added (reference) | 442 | 382 | 325 | 233 |

As is clear from these results, while the measurement values significantly decreased over time in the case where the air-barrier agent was not added (reference), the measurement values did not decrease at all for 22 days in the case where the air-barrier agent was used according to the method of the present invention. Specifically, according to the method of the present invention, alkaline phophatase activity can be precisely measured for a long period of time. Example 2

### Application to calcium measuring reagent:

To a reagent 1 for the calcium measuring reagent, undecane was added as the air-barrier agent according to the formulation described below (product 1 of the present invention). The mixture was kept unsealed in a cool place. Using this reagent 1 for the calcium measuring reagent, a calcium standardized solution (10.0 mg/dl) was sequentially measured to compare and examine the variation in measurement sensitivity. The results are shown in Table 2. As a reference, a reagent 1 containing no undecane (reference product 1) was used.

### (Reagent composition)

### Reagent 1

Monoethanolamine: 0.5 M
Undecane: 0.2 ml/cm²

### Reagent 2

o-Cresolphthalein complexon: 0.13 mM
8-Hydroxy-5-sulfonic acid: 10 mM
Acetic acid buffer solution: 0.24 M (pH 6.0)

### (Measuring method)

200 µl of the reagent 1 was added to 5 µl of a specimen. The mixture was stirred and then heated at 37°C for 5 minutes. 200 µl of the reagent 2 was added to the mixture. The mixture was stirred and then heated at 37°C for 5 minutes. Using a reagent blank as a reference, absorbance of the reagent at a wavelength of 600 nm was measured using a Hitachi 7150 automated analyzer. For the measurement of the reagent blank, a physiological saline solution was used.

### (Results)

**TABLE 2**

| Number of days | Calcium measurement sensitivity (mAbs) | |
|---|---|---|
| | Product 1 of the present invention | Reference product 1 |
| 0 day | 210 | 211 |
| 7 days | 212 | 133 |
| 14 days | 213 | 67 |
| 22 days | 210 | 13 |

As is clear from these results, while the measurement sensitivity significantly decreased over time in the case where the air-barrier agent was not added (reference product 1), the measurement sensitivity did not deteriorate at all after 22 days in the case where the air-barrier agent was used (product 1 of the present invention). Specifically, according to the method of the present invention, calcium can be precisely measured for a long period of time.

### Example 3

### Application to bile acid measuring reagent:

To a reagent 2 for the bile acid measuring reagent, dodecane was added as the air-barrier agent according to the formulation described below (product 2 of the present invention). The mixture was kept unsealed in a cool place. Using this reagent 2 for the bile acid measuring reagent, a bile acid standardized solution (50 µM) was sequentially measured to compare and examine the variation in the measurement sensitivity. The results are shown in Table 3. As a reference, a reagent 2 containing no undecane (reference product 2) was used.

### (Reagent composition)

### Reagent 1

Oxidized β-thionicotinamide adenine dinucleotide: 0.99 mg/ml
Glycine buffer solution: 0.03 M (pH 4.0)

### Reagent 2

Reduced β-nicotinamide adenine dinucleotide: 5.04 mg/ml
3α-Hydroxysteroid dehydrogenase: 9.5 U/ml
Dodecane: 0.3 ml/cm²
Diethanolamine buffer solution: 0.2 M (pH 9.2)

### (Measuring method)

260 µl of the reagent 1 was added to 3 µl of a specimen. The mixture was stirred and then heated at 37°C for 5 minutes. 130 µl of the reagent 2 was added to this mixture and the mixture was stirred. Using a reagent blank as a reference, the variation of absorbance of the reagent at a wavelength of 405 nm was measured from 1 to 3 minutes at 37°C using a Hitachi 7150 automated analyzer. For the measurement of the reagent blank, a physiological saline solution was used.

### (Results)

**TABLE 3**

| Number of days | Bile acid measurement sensitivity (mAbs/min) | |
|---|---|---|
| | Product 2 of the present invention | Reference product 2 |
| 0 day | 33 | 33 |
| 8 days | 33 | 23 |
| 16 days | 32 | 21 |
| 24 days | 32 | 19 |

As is clear from these results, while the measurement sensitivity significantly decreased over time in the case where the air-barrier agent was not added (reference product 2), the measurement sensitivity did not decrease at all after 22 days in the case where the air-barrier agent was used (product 2 of the present invention). Specifically, according to the method of the present invention, bile acid can be precisely measured for a long period of time.

### Example 4

### Application to creatinine measuring reagent:

To a reagent 1 for the creatinine measuring reagent, tridecane was added as the air-barrier agent according to the formulation described below (product 3 of the present invention). The mixture was kept unsealed in a cool place. A creatinine calibrator (10 mg/dl) was sequentially measured using this reagent 1 for the creatinine measuring reagent to compare and examine the variation in the measurement sensitivity. The results are shown in Table 4. As a reference, a reagent 1 containing no tridecane (reference product 3) was used.

### (Reagent composition)

### Reagent 1

Sodium hydroxide: 0.2 M
Tridecane: 0.2 ml/cm²

### Reagent 2

2,4,6-Trinitrophenol: 28.4 mM

### (Measuring method)

300 µl of the reagent 1 was added to 15 µl of a specimen. The mixture was stirred and then heated at 37°C for 5 minutes. 75 µl of the reagent 2 was added to this mixture. The mixture was stirred and then heated at 37°C for 5 minutes. Using a reagent blank as a reference, absorbance at a wavelength of 505 nm was measured using a Hitachi 7150 automated analyzer. For the measurement of the reagent blank, a physiological saline solution was used.

### (Results)

**TABLE 4**

| Number of days | Creatinine measurement sensitivity (mAbs/100 mg/dl) | |
|---|---|---|
| | Product 3 of the present invention | Reference product 3 |
| 0 day | 930 | 929 |
| 8 days | 931 | 369 |
| 16 days | 930 | 90 |

As is clear from these results, while the measurement sensitivity significantly decreased over time in the case where the air-barrier agent was not added (reference product 3), the measurement sensitivity did not decreased at all in the case where the air-barrier agent was used (product 3 of the present invention). Specifically, according to the method of the present invention, creatinine can be precisely measured for a long period of time.

### Example 5

### Application to triglyceride measuring reagent:

To a reagent 1 of the triglyceride measuring reagent containing a coloring agent, tetradecane was added as the air-barrier agent according to the formulation described below (product 4 of the present invention). The mixture was kept unsealed in a cool place. The degree of coloration over time of this reagent 1 and the reagent 1 containing no tetradecane (reference product 4) was compared by the measuring method described below. The results are shown in Figure 1.

### (Reagent composition)

### Reagent 1

Glycerol kinase: 900 U/l
Glycerol 3-phosphate oxidase: 3800 U/l
Peroxidase: 1950 U/l
Sodium 3,5-dimethoxy-N-ethyl-N-(2-hydroxy-3-sulfopropyl)aniline: 1.8 mM
Tetradecane: 0.2 ml/cm²
Good buffer solution: 0.2 M (pH 6.5)

### (Measuring method)

10 ml of the reagent 1 was kept unsealed in a cool place for 40 days. Using a reagent blank as a reference, an absorption spectrum of the reagent at a wavelength from 400 nm to 800 nm was measured using a Beckman DU640 spectrophotometer. For the measurement of the reagent blank, distilled water was used.

### (Results)

As is clear from Figure 1, in the case where the air-barrier agent was not added (reference product 4), the coloring agent was oxidized because oxygen in the air was absorbed in the reagent and significant blue coloration exhibiting an absorption peak at 590 nm was observed, as shown in Figure 1(a). On the contrary, in the case where the air-barrier agent was used (product 4 of the present invention), no oxidization or coloration of the reagent was observed, as shown in Figure 1(b). Specifically, according to the method of the present invention, coloration of the triglyceride measuring reagent can be prevented, whereby the reagent can be stably stored for a long period.

### INDUSTRIAL APPLICABILITY

According to the present invention, a liquid reagent can be effectively prevented from coming in contact with air. Because of this, performance of the liquid reagent can be stably maintained for a long period of time, whereby precise measurement values can be obtained. Therefore, reagents which are conventionally provided only in freeze-dried form can be provided as a liquid reagent unit. Moreover, a liquid reagent prepared from a freeze-dried reagent can be stably stored.

## Claims

1. A method for stabilizing a liquid reagent comprising superposing a layer of an air-barrier substance incompatible with the reagent and having a lower specific gravity than that of the reagent on the surface of the reagent.

2. The method for stabilizing a liquid reagent according to claim 1, wherein the liquid reagent is an aqueous reagent and the specific gravity of the air-barrier substance is from 0.7 to 0.9.

3. The method for stabilizing a liquid reagent according to claim 1 or 2, wherein the liquid reagent is an aqueous reagent and the air-barrier substance is a chain hydrocarbon, cyclic hydrocarbon, ether, ketone, ester, alcohol, carboxylic acid, phenol, nitrogen-containing compound, silicone oil, or a derivative of these compounds.

4. The method for stabilizing a liquid reagent according to any one of claims 1, 2, and 3, wherein the air-barrier substance is used in an amount from 0.03 to 1.0 ml per 1 cm² of the surface of the reagent.

5. A reagent unit comprising a container, a liquid reagent packed therein, and a layer of an air-barrier substance incompatible with the reagent and having a lower specific gravity than that of the reagent.

6. The reagent unit according to claim 5, wherein the specific gravity of the air-barrier substance is from 0.7 to 0.9.

7. The reagent unit according to claim 5 or 6, wherein the liquid reagent is an aqueous reagent and the air-barrier substance is a chain hydrocarbon, cyclic hydrocarbon, ether, ketone, ester, alcohol, carboxylic acid, phenol, nitrogen-containing compound, silicone oil, or a derivative of these compounds.

8. The reagent unit according to any one of claims 5, 6, and 7, wherein the air-barrier substance is used in an amount from 0.03 to 1.0 ml per 1 cm² of the surface of the reagent.
